# EUROPEAN PATENT APPLICATION

(11) **EP 2 918 627 A1**
(43) Date of publication of application: **16.09.2015**
(21) Application number: 14159438.2
(22) Date of filing: 13.03.2014
(51) Int. Cl.: C08H 7/00, C09D 197/00, C08L 97/00, C08L 95/00, C09J 197/00

(54) **Lignin compound**

(71) Applicant: Nederlandse Organisatie voor toegepast- natuurwetenschappelijk onderzoek TNO, 2595 DA 's-Gravenhage (NL)
(72) Inventor: Slaghek, Theodoor Maximiliaan, 2628 VK Delft (NL); van Vliet, Dave, 2628 VK Delft (NL); Giezen, Cecile, 2628 VK Delft (NL); Haaksman, Ingrid Karin, 2628 VK Delft (NL)
(74) Representative: Jansen, Cornelis Marinus

(57) **Abstract**

The invention is directed to a lignin compound, to a method of preparing said lignin compound, to a composition comprising said lignin compound and to uses of said lignin compound.

The chemically modified organosolv lignin compound of the invention comprises one or more units represented by formula (II) below 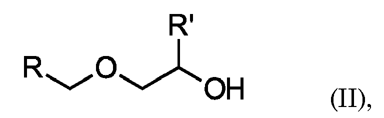 wherein R represents a lignin residue and R' is selected from C₁₋₂₀ alkyl, C₂₋₂₀ alkenyl, (C₁₋₂₀ alkyl)-phenyl, (C₂₋₂₀ alkenyl)-phenyl, C₁₋₂₀ alkoxy, (C₁₋₂₀ alkoxy)-phenyl, C₃₋₆ cylcoalkyl, aryl-(C₁₋₆ alkyl), aryl-(C₂₋₆ alkenyl), (C₁₋₄ alkyl)-aryl-(C₁₋₄ alkyl)

## Description

The invention is directed to a lignin compound, to a method of preparing said lignin compound, to a composition comprising said lignin compound and to a uses of said lignin compound.

Wood is composed of many chemical components, primarily extractives, carbohydrates, and lignin, which are distributed non-uniformly as the result of anatomical structure. Lignin is derived from the Latin term "lignum", which means wood. Lignin has been described as a random, three-dimensional network polymer comprised of variously linked phenylpropane units. Lignin is the second most abundant biological material on the planet, exceeded only by cellulose and hemicellulose, and comprises 15-25 % of the dry weight of woody plants. This macromolecule plays a vital role in providing mechanical support to bind plant fibres together. Lignin also decreases the permeation of water through the cell walls of the xylem, thereby playing an intricate role in the transport of water and nutrients. Finally, lignin plays an important function in a plant's natural defence against degradation by impeding penetration of destructive enzymes through the cell wall. Although lignin is necessary to trees, it is undesirable in most chemical papermaking fibres and is removed by pulping and bleaching processes.

Plant lignins can be broadly divided into three classes: softwood (gymnosperm), hardwood (angiosperm) and grass or annual plant (graminaceous) lignin. Three different phenylpropane units, or monolignols are responsible for lignin biosysnthesis. Guaiacyl lignin is composed principally of coniferyl alcohol units, while guaiacyl-syringyl lignin contains monomeric units from coniferyl and sinapyl alcohol. In general, guaiacyl lignin is found in softwoods while guaiacyl-syringyl lignin is present in hardwoods. Graminaceous lignin is composed mainly of p-coumaryl alcohol units. These three lignin precursors can be represented by the general formula (I) below. 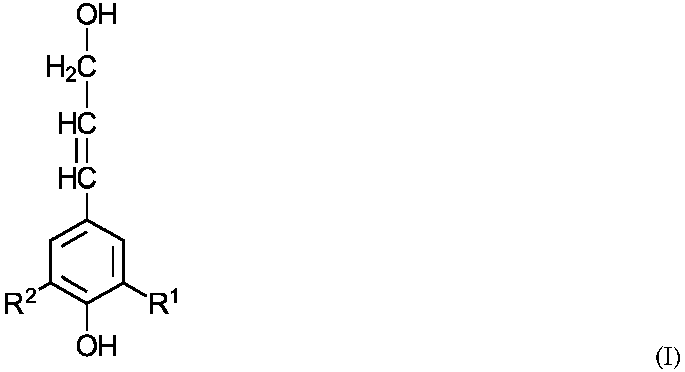 If in formula (I) R¹ is a methoxy group and R² is a hydrogen atom, then the compound is a coniferyl alcohol which is the principal building block of guaiacyl lignin. If in formula (I) both R¹ and R² are methoxy groups, then the compound is a sinapyl alcohol which is the principal building block of syringyl lignin. If in formula (I) both R¹ and R² are hydrogen atoms, then the compound is a p-coumaryl alcohol which is the principal building block of graminaceous lignin.

Extracting native lignin from lignocellulosic biomass during pre-treatment processes such as pulping processes generally results in lignin fragmentation into numerous mixtures of irregular components. Furthermore, the lignin fragments may react with any chemical employed in the pulping process. Consequently, the generated lignin fractions can be referred to as lignin derivatives and/or technical lignins. As it is difficult to elucidate and characterise such complex mixture of molecules, lignin derivatives are usually described in terms of the lignocellulosic plant material used, and the methods by which they are generated and recovered from lignocelluloic plant material, e.g. hardwood lignins, softwood lignins, and annual fibre lignins.

Lignin is available in large quantities, being the unwanted by-product of pulping process for papermaking. The process produces a pulp rich in cellulose and a liquor rich in degraded lignin that is typically burned for energy. The most important chemical pulping process is the Kraft-process using sodium sulphide and sodium hydroxide. Other pulping processes are the soda, anthraquinone, polysulfide, sulphite and organosolv processes. Depending on the process used, the obtained lignin has differing properties. There is, for instance, a large difference in the water-solubility of lignin from different pulping processes, e.g. lignosulphonates from sulfite pulping are water-soluble in the presence of suitable counter-ions, whereas Kraft lignin is water-soluble only in a highly alkaline environment.

Given that lignin derivatives are available from renewable biomass sources there is an interest in using these derivatives in certain industrial applications. For example, lignin derivatives obtained via organosolv extraction, such as those produced by the Lignol^{®} process *(e.g.* Alcell^{®}), have been used in rubber products, adhesives, resins, plastics, asphalt, cement, casting resins, agricultural products, oil-field products and as feedstocks for the production of fine chemicals.

Furthermore, in order to fine tune the properties of lignin derivatives for specific applications, various chemical modifications have been reported.

For example, Malutan et al. (BioResources 2008, 3(4), 1371-1376) describe the chemical modification of lignin through hydroxymethylation and epoxidation. Hydroxymethylation of lignin consists of a reaction of lignin with formaldehyde in an alkaline medium. Through this type of reaction, hydroxymethyl groups are introduced in the lignin's reactive positions, mainly in *ortho* positions (in relation to phenolic OH groups) of aromatic rings.

Winarni et al. (BioResources 2013, 8(2), 2195-2208) describe the preparation of an amphiphatic lignin derivatied by the reaction of lignin with poly(ethylene glycol)diglycidyl ether. The preparation involves the reaction of acetic acid lignin with poly(ethylene glycol) diglycidyl ether, ethoxy-(2-hydroxy)-propoxy-poly(ethylene glycol) glycidyl ether, or dodecyloxy-poly(ethylene glycol)glycidyl ether in an aqueous solution of sodium hydroxide.

US-A-2012/0 329 100 describes an enzyme stabiliser comprising a lignin derivative produced by the reaction between a lignin and a hydrophilic compound. The hydrophilic compound can be a glycidyl ether-based compound. This document does not mention organosolv lignin.

Objective of the invention is to provide a further lignin derivative that has been chemically modified to alter the properties thereof.

A further objective of the invention is to provide a method of preparing a chemically modifying an organosolv lignin compound.

The inventors found that a chemically modified organosolv lignin with desirable functional properties can be obtained by reacting organosolv lignin with certain glycidyl ether compounds.

Accordingly, in a first aspect the invention is directed to a chemically modified organosolv lignin compound comprising one or more units represented by formula (II) below 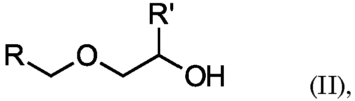 wherein R represents a lignin residue and R' is selected from C₁₋₂₀ alkyl, C₂₋₂₀ alkenyl, (C₁₋₂₀ alkyl)-phenyl, (C₂₋₂₀ alkenyl)-phenyl, C₁₋₂₀ alkoxy, (C₁₋₂₀ alkoxy)-phenyl, C₃₋₆ cylcoalkyl, aryl-(C₁₋₆ alkyl), aryl-(C₂₋₆ alkenyl), (C₁₋₄ alkyl)-aryl-(C₁₋₄ alkyl), ...

The molecular weight of R' in formula (II) is 180 g/mol or less, preferably 150 g/mol or less, such as in the range of 15-130 g/mol.

The chemically modified organosolv lignin compound may be substantially free of sulphur. This expression is intended to refer to the substantial absence of elemental sulphur and covalently bound sulphur. The expression "substantial absence" typically refers to contents of less than 1 % sulphur, preferably less than 0.5 % sulphur, more preferably less than 0.1 % sulphur. In an embodiment, the chemically modified organosolv lignin compound is completely free of sulphur. Such sulphur-free lignin is, for example, known from WO-A-97/14747, the content of which is herewith completely incorporated by reference. The amount of elemental sulphur in the lignin compound or derivative thereof can be determined with Soxhlet extraction (Harwood et al. in "Experimental organic chemistry; standard and microscale", 2nd edition, Blackwell science Ltd, 1999, Oxford, United Kingdom, p. 129). The amount of covalently bound sulphur can be determined by measuring the total amount of sulphur using Schöniger combustion (Harris in "Quantitative chemical analysis", 6th edition, Freeman, 2003, New York, United States of America, p. 680), and subtracting the amount of sulphur as measured using ion chromatography (Skoog et al. in "Analytical chemistry; an introduction", 6th edition, Saunders College Publishing, 1994, United States of America, p. 486-521).

In an embodiment, the chemically modified organosolv lignin compound is derived from a lignin compound that is obtained according to a method wherein biomass is pre-treated with an aqueous solution of acid or base, and wherein subsequently saturated or super heated steam is passed through said biomass. during this process, the water activity can be controlled by means of temperature and pressure of the super heated steam to be less than 1, such as in the range of 0.4-0.8. The acid is preferably sulphuric acid. The base can be chosen from the group consisting of calcium hydroxide, sodium hydroxide, potassium hydroxide, and ammonium hydroxide. The acid or base can also be formed *in situ.* Such a process is, for example, described in WO-A-2011/071386, the content of which is herewith completely incorporated by reference.

The properties of lignins varies with the type of process used to separate native lignins from cellulose and other biomass constituents. Lignin preparations can, for example, be obtained by (1) solvent extraction of finely ground wood, (2) acidic dioxane extraction (acidolysis) of wood. Lignin can also be isolated from biomass pre-treated using (3) steam explosion, (4) dilute acid hydrolysis, (5) ammonia fibre expansion (AFEX), and (6) autohydrolysis methods. Lignin can be recovered after biomass pre-treatment (e.g. pulping) of lignocellulosics including industrially operated kraft, soda pulping (and their modifications), or sulphite pulping. In addition a number of various pulping methods have been developed but not industrially introduced. Among them four major "organosolv" pulping methods tend to produce highly-purified lignin mixtures. The first organosolv method uses ethanol/solvent pulping (aka the Lignol^{®} (Alcell^{®}) process); the second organosolv method uses alkaline sulphite anthraquinone methanol pulping (aka the "ASAM" process); the third organosolv process uses methanol pulping followed by methanol NaOH, and anthraquinone pulping (aka the "Organocell" process); the fourth organosolv process uses acetic acid/hydrochloric acid or formic acid pulping (aka the "Acetosolv" and "Formacell" processes). The chemically modified lignin compound of the invention is derived from organosolv lignin.

It should be noted that ASAM organosolv pulping will generate derivatives of lignin containing significant amounts of organically-bound sulphur. Ethanol/solvent pulping, Organocell pulping (i.e. methanol pulping followed by methanol NaOH, and anthraquinone pulping), formic acid pulping, and acetic acid/hydrochloric acid pulping will generate lignin derivatives that are essentially sulphur-free or contain low amounts of inorganic sulphur. Accordingly, in an embodiment, the chemically modified lignin compound is derived from a lignin derivative obtained by ethanol/solvent pulping, Organocell pulping, formic acid pulping, and acetic acid/hydrochloric acid pulping.

The chemically modified organosolv lignin compound preferably has a number average molecular weight in the range of 200-10 000 g/mol, preferably in the range of 350-5000 g/mol, more preferably in the range of 500-3000 g/mol. Such number average molecular weight can suitably be determined by gel permeation chromatography against a polystyrene standard.

In an embodiment, the chemically modified organosolv lignin compound has a bimodal distribution of the molecular weight. The chemically modified organosolv lignin compound can for example comprise a first component having a Mₙ of 50 000 - 200 000 g/mol, preferably 75 000 - 125 000 g/mol, more preferably 100 000 - 150 000 g/mol. The chemically modified lignin compound can comprise a second component having a Mₙ of 1000 - 2500 g/mol, preferably 1250 - 2250 g/mol, more preferably 1500 - 2000 g/mol. The first component may be present in the chemically modified organosolv lignin compound in an amount of 1-5 wt.% based on total weight of the chemically modified lignin compound. The second component may be present in the chemically modified organosolv lignin compound in an amount of 95-99 wt.% based on total weight of the chemically modified lignin compound.

The chemically modified organosolv lignin compound of the invention is preferably rendered hydrophilic. Hydrophilicity may be assessed using standard contact angle measurements. In the case of lignin a pellet may be formed using a Fourier Transfer InfrarRed KBr pellet press. Then a water droplet is added onto the pellet surface and the contact angle between the water droplet and the lignin pellet is measured using a contact angle gionometer. As the hydrophilicity of lignins increases the contact angle decreases. Preferably, the chemically modified lignin compound has a contact angle with water of 70° or less, preferably 60° less, such as 50° or less.

The chemically modified organosolv lignin compound of the invention may have a phenolic hydroxyl content in the range of 2-8 mmol/g, preferably in the range of 2.5-7 mmol/g, more preferably in the range of 3-6 mmol/g.

The chemically modified organosolv lignin compound of the invention may have a total hydroxyl content in the range of 0.1-15 mmol/g, preferably in the range of 1-13 mmol/g, or in the range of 1.5-12 mmol/g, or in the range of 2-11 mmol/g, or in the range of 2.5-10 mmol/g. The total hydroxyl content refers to the quantity of hydroxyl groups in the chemically modified lignin compound and is the sum of the quantity of aliphatic and phenolic hydroxyl groups. The hydroxyl content can be measured by quantitative high resolution ¹²³C NMR spectroscopy using, for instance, 1,3,5-trioxane and tetramethyl silane (TMS) as internal reference.

In a further aspect, the invention is directed to a method of preparing a chemically modified organosolv lignin compound comprising - reacting an alkaline organosolv lignin compound with a glycidyl ether compound at a temperature in the range of 30-100 °C, said glycidyl ether compound having a molecular weight of 250 g/mol or less;
- neutralising the reaction mixture with acid; and
- isolating the chemically modified lignin compound.

The reaction temperature is suitably in the range of 30-100 °C, preferably in the range of 30-80 °C, more preferably in the range of 40-60 °C. The reaction may be carried out for 6-48 hours, preferably 12-36 hours.

After reacting, the reaction mixture is suitably cooled, neutralised, centrifuged, dialysed and freeze-dried to isolate the chemically modified organosolv lignin product. The method of the invention results in a unique lignin product that is structurally distinguished from lignin products described in the prior art.

Therefore, in a further aspect the invention is directed to a chemically modified organosolv lignin compound obtainable by the method of the invention.

The lignin compound of the invention can be used in a composition to alter the physical properties, such as the mechanical properties of the composition.

Accordingly, in yet a further aspect the invention is directed to a composition comprising a chemically modified organosolv lignin compound according to the invention.

Some examples of suitable compositions in which the chemically modified organosolv lignin compound of the invention can be comprised include bitumen compositions, concrete compositions, and adhesive compositions.

In yet a further aspect the invention is directed to the use of the chemically modified organosolv lignin compound of the invention as stiffening agent. It was found by the present inventors that the inclusion of the chemically modified lignin compound of the invention in compositions can advantageously increase the stiffness of such compositions. For example, when the chemically modified lignin compound of the invention is included in a bitumen composition as a binder material, the stiffness of the bitumen can be improved as compared to the same bitumen composition without the chemically modified lignin compound.

The inventors further found that the chemically modified organosolv lignin compound can be advantageously used as a flame retardant. Such a flame retardant may be used in many different applications. The chemically modified organosolv lignin compound may be used alone or in combination with other compounds. Hence, in an embodiment the invention relates to a flame retardance comprising the chemically modified organosolv lignin compound of the invention.

Another advantageous application of the chemically modified organosolv lignin compound is as a radical scavenger. The presence of radicals often leads to the deterioration of an object or composition over time. It was found that that chemically modified organosolv lignin of the invention is useful as a scavenger to remove radicals and thereby prolong the lifetime of an object or composition in which the chemically modified organosolv lignin compound is present.

Yet a further advantageous application of the chemically modified organosolv lignin compound is in ultraviolet filters, to filter out undesirable ultraviolet radiation. Such radiation is of high energy and may be detrimental. Therefore, for certain applications it is desirable to filter out the ultraviolet part of the light. The chemically modified organosolv lignin compound may be used alone or in combination with other compounds in such an ultraviolet filter. Hence, in an embodiment the invention relates to an ultraviolet filter comprising the chemically modified organosolv lignin compound of the invention.

The inventors found that the chemically modified organosolv lignin compound can further be advantageously used in water treatment chemicals for the treatment of water. Hence, in yet a further embodiment the invention relates to a process for treating water, wherein the water is subjected to a chemically modified organosolv lignin compound of the invention. Such a process can, for instance, be used for the purification of water.

For the purpose of clarity and a concise description features are described herein as part of the same or separate embodiments, however, it will be appreciated that the scope of the invention may include embodiments having combinations of all or some of the features described.

The invention will now be further elucidated by means of the following examples, which are not intended to limit the scope of the invention in any way.

### Examples

### Synthesis example 1

100 grams of organosolv lignin was added to 110.1 M sodium hydroxide solution in water at 50 °C and subsequently 26 ml ethylhexyl glycidyl ether was added. After 24 hours, the mixture was cooled, neutralised, centrifuged, dialysed and freeze-dried after which the product was isolated and used in follow up experiments. The yield was 120 grams.

### Synthesis example 2

100 grams of organosolv lignin was added to 110.1 M sodium hydroxide solution in water at 50 °C and subsequently 15 ml allyl glycidyl ether was added. After 24 hours the mixture was cooled, neutralised, centrifuged, dialysed and freeze-dried after which the product was isolated and used in follow up experiments. The yield was 65 grams.

### Synthesis example 3

100 grams of organosolv lignin was added to 110.1 M sodium hydroxide solution in water at 50 °C and subsequently 17 ml 1,2-epoxy-3-phenoxy propane ether was added. After 24 hours, the mixture was cooled, neutralised, centrifuged, dialysed and freeze-dried after which the product was isolated and used in subsequent experiments. The yield was 85 grams.

### Synthesis example 4

100 grams of organosolv lignin was added to 110.1 M sodium hydroxide solution at 50 °C and subsequently 26 ml ethylhexyl glycidyl ether was added. After 24 hours, the mixture was cooled, centrifuged, dialysed and freeze-dried after which the product was isolated and used in follow up experiments. The yield was 52 grams.

### Synthesis example 5

100 grams of organosolv lignin was added to 110.1 M sodium hydroxide solution at 50° C. Subsequently 10 gram sodiumborohydride was added. After 24 hours, the mixture was cooled down, centrifuged, dialysed and freeze-dried after which the product was isolated and used in follow up experiments. The yield was 45 grams.

### Comparative synthesis example:

To 110.1 M sodium hydroxide solution at 50°C, 26 ml ethylhexyl glycidyl ether was added. After 24 hours, the mixture was cooled, centrifuged, dialysed and freeze-dried exactly as the earlier lignin containing products were isolated. The result was that no polymeric product was present. The yield was 20 milligrams,

### Example 1

Bitumen (70/100) was heated to about 160 °C. Heating was done with a heating plate and the bitumen was mixed for about 15 minutes at 500 rotations per minute using a propeller mixer. Lignin was gradually added to the bitumen (with a sieve) while mixing with a propeller mixer at about 500 rotations per minute. After all the lignin was added, the bitumen composition was homogenised by mixing at about 500 rotations per minute for about 30 minutes.

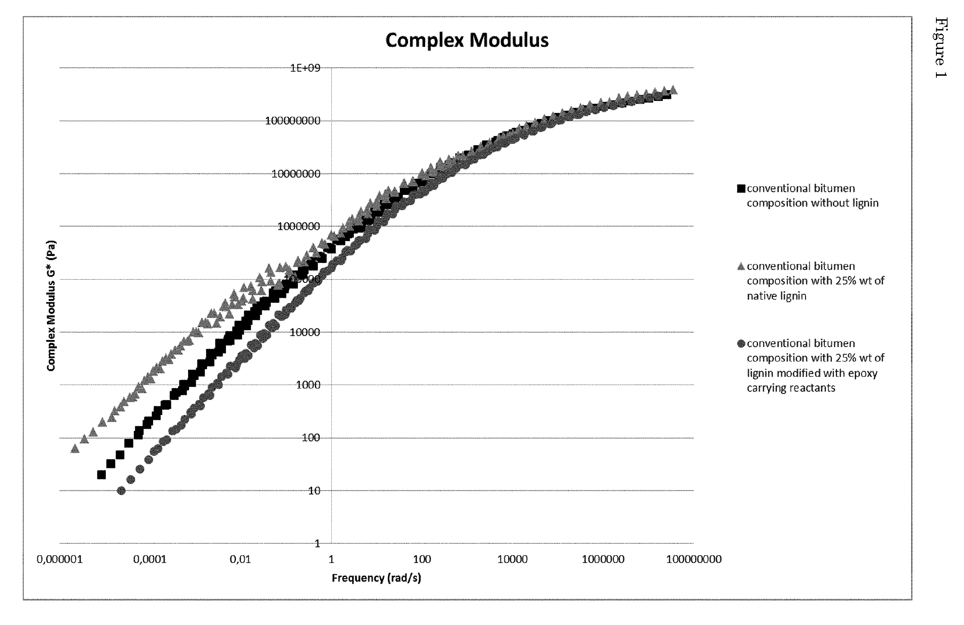

Figure 1 shows complex modulus of three different bitumen compositions (one conventional bitumen composition without lignin, one bitumen composition that contains 25 wt.% of native lignin, and one bitumen composition that contains 25 wt.% of lingnin modified with epoxy carrying reactants). This figure shows that the inclusion of lignin in the bitumen composition does not largely affect the properties of the bitumen composition. By modification of the lignin, the complex modulus properties of the bitumen can further be tuned.

Dynamic shear tests were conducted using a Rheometrics RAA asphalt analyser - Dynamic Shear Rheometer (DSR). The DSR test was basically conducted to determine the viscoelastic properties, i.e. the response or dependence of the materials on temperature and loading time. In this regard, the complex modulus and phase angle at different temperatures and loading frequencies were determined.

The specimen was placed between two circular parallel plates. The upper plate was fixed; while the lower part oscillated applying the shear strain during testing. The test was carried out in a temperature controlled mini-oven (chamber). The temperature of the sample was controlled with air, for temperatures above 20 °C the sample was heated using hot air, for temperatures below 20 °C cooled air was used. The temperature control has an accuracy of ± 0.1 °C when adequate time (usually 10 min) is provided to stabilise the temperature. The temperature of the sample was measured in the plate. The controlling mechanism and data acquisition was performed by a computer connected to the DSR equipment.

In the DSR test, the bituminous materials were subjected to a sinusoidal loading of constant strain at different loading frequencies (frequency sweep). The frequency sweep test was conducted at eight different temperatures ranging between -10 °C and 60 °C. Every test was carried out at frequencies ranging between 0.1-400 rad/s. Before conducting the frequency sweep tests (constant strain, varying frequency), a strain sweep test (constant frequency, varying strain) was performed to determine the strain level at which the material response remains in the linear region. Two parallel plate geometries with a diameter of 8 mm and 25 mm were used. Table 1 provides the testing conditions used in the DSR.

**Table 1 - DSR test conditions**

| | |
|---|---|
| Temperatures | -10, 0, 10, 20, 30, 40, 50 and 60 °C ± 0.1 °C |
| Parallel plates | 8 mm; 25 mm |
| Sample thickness | 2 mm; 1 mm target thickness |
| Frequency | 0.1-400 rad/s |

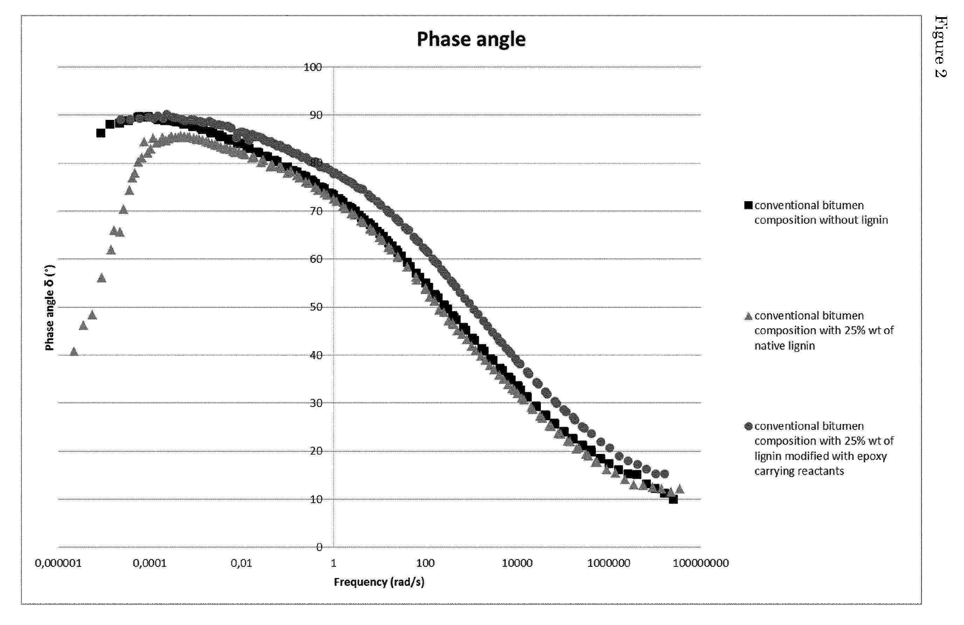

A better understanding and analysis of rheological properties of viscoelastic materials can be made with the use of master curves. Master curves allow the estimation of properties at a wider range of temperatures and frequencies. The complex modulus master curve and the phase angle master curve were constructed. The Time-Temperature Superposition (TTS) principle was used to generate master curves of the complex modulus and phase angle at a reference temperature of 20 °C. These master curves are shown in figures 1 and 2.

## Claims

**1.** Chemically modified organosolv lignin compound comprising one or more units represented by formula (II) below 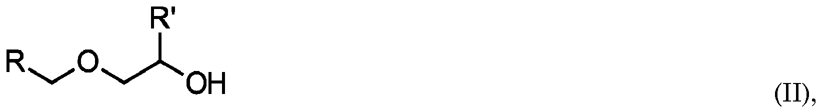 wherein R represents a lignin residue and R' is selected from C₁₋₂₀ alkyl, C₂₋₂₀ alkenyl, (C₁₋₂₀ alkyl)-phenyl, (C₂₋₂₀ alkenyl)-phenyl, C₁₋₂₀ alkoxy, (C₁₋₂₀ alkoxy)-phenyl, C₃₋₆ cylcoalkyl, aryl-(C₁₋₆ alkyl), aryl-(C₂₋₆ alkenyl), and (C₁₋₄ alkyl)-aryl-(C₁₋₄ alkyl).

**2.** Chemically modified organosolv lignin compound according to claim 1, wherein the molecular weight of R' is 180 g/mol or less, preferably 150 g/mol or less, such as in the range of 15-130 g/mol.

**3.** Chemically modified organosolv lignin compound according to claim 1 or 2, wherein the chemically modified lignin compound is substantially free of chemically bound and/or elemental sulphur.

**4.** Chemically modified organosolv lignin compound according to any one of claims 1-3, wherein the chemically modified lignin compound has a number average molecular weight of 200-10 000 g/mol, preferably in the range of 350-5000 g/mol, more preferably in the range of 500-3000 g/mol.

**5.** Chemically modified organosolv lignin compound according to any one of claims 1-3, wherein the chemically modified organosolv lignin compound has a bimodal distribution of the molecular weight, preferably the chemically modified lignin compound comprises 1-5 wt.% based on total weight of the chemically modified lignin compound of a first component having a Mₙ of 100 000 - 150 000 g/mol and 95-99 wt.% based on total weight of the chemically modified lignin compound of a second component having a Mₙ of 1500 - 2000 g/mol.

**6.** Chemically modified organosolv lignin compound according to any one of claims 1-5, wherein the chemically modified lignin compound is derived from ethanol/solvent pulping, Organocell pulping, formic acid pulping, or acetic acid/hydrochloric acid pulping.

**7.** Chemically modified organosolv lignin compound according to any one of claims 1-6, wherein the chemically modified organosolv lignin compound has a contact angle with water of 70° or less, preferably 60° less, such as 50° or less.

**8.** Method of preparing a chemically modified organosolv lignin compound comprising
- reacting an alkaline organosolv lignin compound with a glycidyl ether compound at a temperature in the range of 30-100 °C, said glycidyl ether compound having a molecular weight of 250 g/mol or less;
- neutralising the reaction mixture with acid; and
- isolating the chemically modified organosolv lignin compound.

**9.** Method according to claim 8, wherein the ratio between the hydroxyl groups in said alkaline organosolv lignin compound and the glycidyl ether groups in said glycidyl ether compound is in the range of 10:1-1:10, preferably in the range of 10:1-1:5, more preferably in the range of 10:1-1:1.

**10.** Chemically modified organosolv lignin compound obtainable by a method according to claim 9.

**11.** Composition comprising a chemically modified organosolv lignin compound according to any one of claims 1-7 or 10.

**13.** Use of a chemically modified organosolv lignin compound according to any one of claims 1-10 as stiffening agent, such as in bitumen or in a coating.

**14.** Use of a chemically modified organosolv lignin compound according to any one of claims 1-10 as flame retardant.

**15.** Use of a chemically modified organosolv lignin compound according to any one of claims 1-10 as radical scavenger.
